# EUROPÄISCHE PATENTSCHRIFT

(11) **EP 1 194 266 B1**
(45) Veröffentlichungstag und Bekanntmachung des Hinweises auf die Patenterteilung: **16.02.2005**
(21) Anmeldenummer: 01911744.9
(22) Anmeldetag: 07.03.2001
(51) Int. Cl.: B23Q 3/155

(54) **WERKZEUGWECHSELVORRICHTUNG FÜR EINE WERKZEUGMASCHINE**
TOOL-CHANGING DEVICE FOR A MACHINE TOOL
DISPOSITIF DE CHANGEMENT D'OUTIL DESTINE A UNE MACHINE-OUTIL

(30) Priorität: 15.03.2000 DE 10012665
(43) Veröffentlichungstag der Anmeldung: 10.04.2002
(73) Patentinhaber: Deckel Maho Seebach GmbH, 99846 Seebach (DE)
(72) Erfinder: LASCH, Thorsten, 99880 Aspach (DE)
(74) Vertreter: Elbertzhagen, Otto, Dipl.-Ing.
(86) Internationale Anmeldenummer: PCT/EP2001/002547
(87) Internationale Veröffentlichungsnummer: WO 2001/068316

(56) Entgegenhaltungen:
- EP-A- 0 291 570
- EP-A- 0 642 880
- DE-A- 2 107 419
- DE-A- 4 009 537

## Beschreibung

### TECHNISCHES GEBIET

Die Erfindung betrifft eine Werkzeugwechselvorrichtung nach dem Oberbegriff des Patentanspruchs 1.

### STAND DER TECHNIK

Eine Werkzeugwechselvorrichtung der als bekannt vorausgesetzten Art (DE 43 31 064 A1) weist eine Transportvorrichtung auf, die längs zweier horizontaler Linearführungen und längs einer dritten vertikalen Linearführung zwischen einer Magazinübergabeposition und einer Spindelübergabeposition bewegbar ist. Die Transportvorrichtung trägt eine Werkzeugaufnahme mit zwei Greifern, die um eine zur vertikalen Vorschubrichtung und zur Spindelachse senkrechte Achse zwischen der Spindelübergabeposition mit horizontaler Ausrichtung der Werkzeuge und der vertikalen Magazinübergabeposition schwenkbar sind. Die Verschwenkbewegung wird über eine Kulissenführung von der Bewegung der Transportvorrichtung abgeleitet. Für den Transport des Werkzeugs werden somit drei Vorschubachsen und mindestens eine Schwenkachse benötigt. Die Vorschubachsen müssen mit einem Vorschubantrieb versehen sein. Eine derartige Werkzeugwechselvorrichtung ist aufwendig und teuer. Sie benötigt außerdem viel Raum.

Eine weitere bekannte Werkzeugwechselvorrichtung (DE 40 09 537 C2) weist eine Transportvorrichtung auf, die längs einer einzigen Linearführung zwischen einer einem Magazin benachbarten übergabeposition und einer Spindelübergabeposition bewegbar ist. Die Transportvorrichtung trägt eine Werkzeugaufnahme mit zwei Greifern, die um eine zur Vorschubrichtung parallele Achse zwischen der Spindelübergabeposition mit horizontaler Ausrichtung der Werkzeuge und der vertikalen Magazinübergabeposition schwenkbar sind. Die Verschwenkbewegung wird über eine Kulissenführung von der Bewegung der Transportvorrichtung, die zwischen Magazinübergabeposition und Spindelübergabeposition erfolgt, mittels eines Zahnstangengetriebes abgeleitet. Die Werkzeuge müssen bei der bekannten Vorrichtung zwischen dem Magazin und der in der Magazinübergabeposition stehenden Werkzeugaufnahme mittels eines besonderen Handhabungsgeräts getauscht werden. Das Zahnstangengetriebe und das zusätzliche Handhabungsgerät verteuern die Vorrichtung erheblich.

### DIE ERFINDUNG

Ausgehend von diesem Stand der Technik liegt der Erfindung die Aufgabe zugrunde, eine Werkzeugwechselvorrichtung der als bekannt vorausgesetzten Art einfacher, preiswerter und weniger störanfällig auszubilden.

Die Lösung dieser Aufgabe erfolgt mit den Merkmalen des Patentanspruchs 1.

Die Werkzeugwechslvorrichtung kommt mit einem einzigen Antrieb für den Werkzeugtransport aus. Die Transportrichtung ist so gewählt, daß mit der Transportbewegung ein Werkzeug direkt in eine Werkzeughalterung im Magazin eingeschoben werden kann. Das Werkzeug wird durch die Transportbewegung in einem Zug in die Spindelübergabeposition gebracht. Für das Verschwenken des Werkzeugs in Spindelachsrichtung wird kein Getriebe benötigt.

Bevorzugte Ausgestaltungen der Erfindung ergeben sich aus den Unteransprüchen.

Die Werkzeugwechselzeit kann bei einer bevorzugten Ausführungsform erheblich verkürzt werden, wenn zwei Transportvorrichtungen nebeneinander angeordnet werden, von denen die eine das genutzte, in der Werkzeugspindel gehaltene Bearbeitungswerkzeug an einer Spindelübergabeposition abholt und in einen leeren Speicherplatz des Werkzeugmagazins ablegt, während die andere Transportvorrichtung ein dem Werkzeugmagazin entnommenes, neues Bearbeitungswerkzeug in der Spindelübergabeposition für die Werkzeugspindel bereithält.

### KURZBESCHREIBUNG DER ZEICHNUNGSABBILDUNG

Nachstehend wird eine bevorzugte Ausführungsformen der Erfindung anhand der Zeichnungen im einzelnen beschrieben. Es zeigen:
- Figur 1 -: eine schematische Seitenansicht einer Werkzeugwechselvorrichtung;
- Figur 2 -: eine Frontansicht des Werkzeugmagazins mit der Werkzeugwechselvorrichtung nach Fig. 1.

### BESTER WEG ZUR AUSFÜHRUNG DER ERFINDUNG

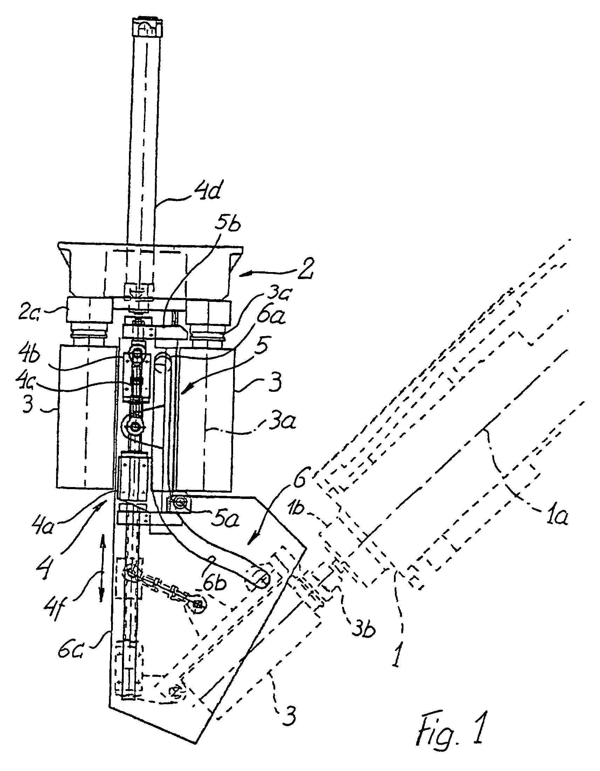

Ein Werkzeugmagazin 2 trägt an einer in Fig. 1 nicht dargestellten, umlaufend angetriebenen Magazinkette 2b eine Vielzahl von Werkzeughalterungen 2c, in die Werkzeuge 3 mit ihrem Kegelschaft 3b aufgenommen sind. In einer Magazinbereitstellungspositionen ist eine Werkzeugwechselvorrichtung mit einer von zwei spiegelbildlich ausgebildeten Transportvorrichtungen 4 vorgesehen, die zwei auf einer in vertikaler Richtung verlaufenden Führung 4e verschiebliche Schlitten 4a und 4b umfaßt. An dem ersten Schlitten 4a ist eine Werkzeugaufnahme 5 um eine Schwenkachse 5a verschwenkbar gelagert. An dem zweiten Schlitten 4b greift ein als Kolben-Zylindereinheit ausgebildeter Vorschubantrieb 4d an. An dem zweiten Schlitten 4b ist ein Ausgleichshebel 4c gelagert, der mit Abstand zur Schwenkachse 5a gelenkig mit der Werkzeugaufnahme 5 verbunden ist.

In der Magazinbereitstellungsposition ist ein Träger 6c einer Betätigungsvorrichtung 6 für die Werkzeugaufnahme 5 stationär an dem Magazin 2 angeordnet. Die Betätigungsvorrichtung 6 verschwenkt die Werkzeugaufnahme 5 während der Verschiebung der Transportvorrichtung 4 zwischen der Bereitstellungsposition und einer Spindelübergabeposition mittels eines an ihr befestigten Kulissensteins 6d, der in einer im Träger 6c vorgesehenen Kulisse 6b geführt ist.

In der Spindelübergabeposition wird eine Werkzeugspindel 1 einer weiter nicht dargestellten Werkzeugmaschine mit ihrem Werkzeugspannkonus 1b in fluchtende Übereinstimmung mit dem Kegelschaft 3b eines bereitgestellten Werkzeugs 3 gebracht.

Dabei fluchtet auch die Spindelachse 1a mit der Rotationsachse 3a des Werkzeugs 3.

An der Werkzeugaufnahme 5 ist eine Führungsplatte 5b gelagert, die quer zur durch einen Doppelpfeil gekennzeichneten Transportrichtung 4f der Transportvorrichtung 4 zwischen zwei Positionen verschieblich ist. In einer ersten Position ergreift die Führungsplatte 5b ein Werkzeug 3 unterhalb ihres Kegelschafts 3b in einer umlaufenden keilförmigen Ringnut 3c und hält das Werkzeug 3 in seiner Lage relativ zur Werkzeugaufnahme 5 unveränderlich fest. In der zweiten Position gibt die Führungsplatte 5b das Werkzeug 3 frei, so daß es aus der Bereitstellungsposition von der Magazinkette 2b abtransportiert bzw. in der Spindelübergabeposition von der Werkzeugspindel 1 in den Bearbeitungsbereich verfahren werden kann.

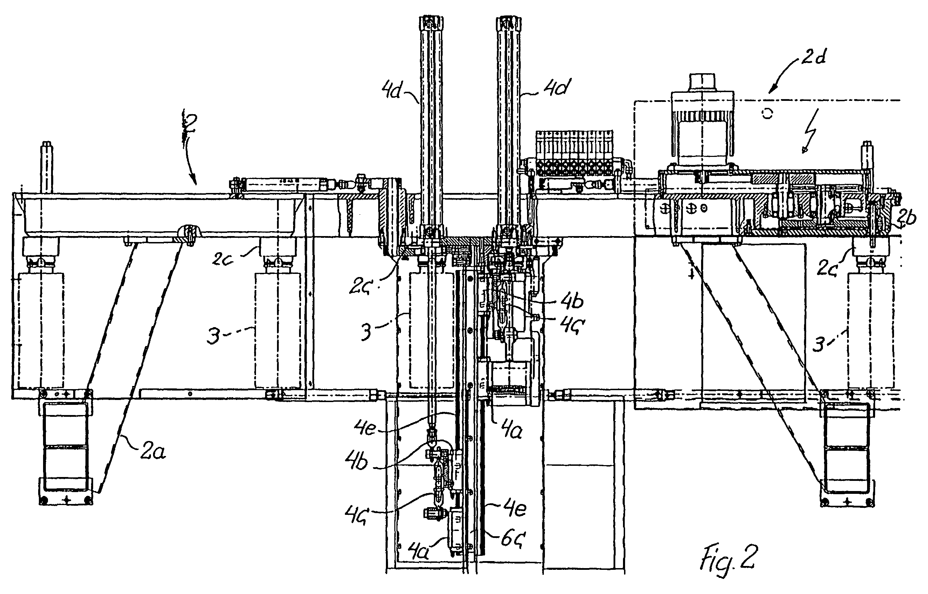

Fig. 2 zeigt eine Gesamtansicht des Werkzeugmagazins 2 mit der Werkzeugwechselvorrichtung jedoch ohne die Werkzeugmaschine. An einem Magazingestell 2a ist eine Magazinkette 2b geführt, die von einem Kettenantrieb 2d umlaufend angetrieben wird. Die Magazinkette 3 weist mehrere Werkzeughalterungen 2c auf, die Werkzeuge 3 tragen. In der Magazinbereitstellungsposition weist die Magazinkette 2b eine leere Werkzeughalterung 2c und eine mit dem als nächstes einzuwechselnden Werkzeug 3 bestückte Werkzeughalterung 2c auf.

Jeder dieser beiden Werkzeughalterungen 2c ist eine der vorstehend beschriebenen Transportvorrichtungen 4 zugeordnet. Zwischen den beiden in der Bereitstellungsposition befindlichen Werkzeughalterungen 2c ist der Träger 6c angeordnet, der zu beiden Seiten jeweils eine Führung 4e trägt.

Auf den Führungen 4e sind jeweils zwei Schlitten 4a und 4b der Transportvorrichtungen 4 in spiegelbildlicher Anordnung zwischen der Bereitstellungsposition und der Spindelübergabeposition verschieblich.

Ein Werkzeugwechsel erfolgt mit folgendem Bewegungsablauf: Von dem Kettenantrieb 2d wird die Magazinkette 2b solange angetrieben, bis das nächste zur Bearbeitung erforderliche Werkzeug 3 in der Bereitstellungsposition steht. Das ausgewählte Werkzeug 3 wird von der Führungsplatte 5b der in dieser Position befindlichen Werkzeugaufnahme 5 in seiner Nut 3c erfaßt. Am Anfang der folgenden Transportbewegung des Werkzeugs 3 zur Spindelübergabeposition wird der Kegelschaft 3b des Werkzeugs aus der Werkzeughalterung 2c herausgezogen. Während der weiteren Abwätzsbewegung schwenkt die Werkzeugaufnahme 5 in eine zur Spindelachse 1a parallele Richtung, die das Werkzeug 3 beim Erreichen der Spindelübergabeposition einnimmt. Neben dieser mit einem neuen Werkzeug 3 bestückten Werkzeugaufnahme 5 befindet sich bereits die leere Werkzeugaufnahme 5 der zweiten Transportvorrichtung 4 mit gleicher Neigung in der Spindelübergabeposition.

Die Werkzeugspindel 1 wird in Richtung ihrer Spindelachse 1a mit dem auszutauschenden Werkzeug 3 in die Spindelübergabeposition verfahren. Dort ergreift die Führungsplatte 5b der leeren Werkzeugaufnahme 5 das von der Werkzeugspindel 1 gespannte Werkzeug 3. Ein kurzer Rückhub der Werkzeugspindel 1 löst den Kegelschaft 3b aus dem Werkzeugspannkonus 1b. Die Transporteinrichtung 4 transportiert das gebrauchte Werkzeug 3 nun zur leeren Werkzeughalterung 2c im Magazin 2. Gleichzeitig wird die Werkzeugspindel 1 parallel zu sich selbst zur zweiten Werkzeugaufnahme 5 verschoben, von der sie durch Absenken in Spindelachsrichtung das neue Werkzeug 3 übernimmt. Nach dessen Übernahme wird die Führungsplatte 5b von dem Werkzeug 3 zurückgezogen. Die Transportvorrichtung 4 kehrt leer in ihre Ausgangslage zurück, wobei die Betätigungvorrichtung 6 die Werkzeugaufnahme 5 wieder in die zur Übernahme eines nächsten Werkzeugs 3 geeignete Winkellage verschwenkt. Der Werkzeugwechselvorgang ist damit abgeschlossen und die Werkzeugspindel 1 zum Start eines Bearbeitungsvorgangs bereit.

Der Werkzeugwechsel kann auch mit einer einzigen Transportvorrichtung 4 vorgenommen werden. Dabei müssen allerdings die Transportbewegungen mit dem gebrauchten und mit einem neuen Werkzeug 3 nacheinander erfolgen. Auch der Einsatz einer einzigen Transportvorrichtung 4 mit einem Doppelgreifer ist möglich, wenn im Werkzeugmagazin 2 jeweils eine leere Werkzeughalterung 2c neben einer jeweils unmittelbar benachbarten Werkzeughalterung 2c mit dem nächsten benötigten Werkzeug 3 bereitgestellt werden kann.

## Patentansprüche

1. Werkzeugwechselvorrichtung für eine Werkzeugmaschine mit einer Werkzeugspindel (1), die mindestens in Spindelachsrichtung verfahrbar ist und in die ein Werkzeug (3) in einer Spindelübergabeposition einspannbar ist, mit einem Werkzeugmagazin (2), in dem ein zu wechselndes, eine Rotationsachse (3a) aufweisendes Werkzeug (3) in einer von der Spindelachsrichtung abweichenden Ausrichtung gehaltert ist, und mit einer Transportvorrichtung (4), an der eine Werkzeugaufnahme (5) gelagert ist, die mittels einer eine Kulissenführung (6a, 6b) aufweisenden Betätigungsvorrichtung (6) das Werkzeug (3) während seines Transports zwischen der Spindelübergabeposition und einer Bereitstellungsposition um eine Schwenkachse (5a) verschwenkt, wobei die Transportvorrichtung (4) für einen gesamten Transportweg zwischen Bereitstellungsposition und Spindelübergabeposition ausgebildet ist und die Schwenkachse (5a) senkrecht zu einer durch die Transportrichtung (4f) und die Spindelachse (1a) aufgespannten Ebene verläuft,
**dadurch gekennzeichnet,**
**daß** die Transportvorrichtung (4) so ausgelegt ist, daß die Transportrichtung (4f) für den gesamten Transportweg mit der Ausrichtung der Rotationsachse (3a) der magazinierten Werkzeuge (3) fluchtet.

2. Werkzeugwechselvorrichtung nach Anspruch 1,
**dadurch gekennzeichnet,**
**daß** ein Kulissenstein (6a) der Betätigungsvorrichtung (6) an der beweglichen Werkzeugaufnahme (5) befestigt ist und die Kulisse (6b) stationär angeordnet ist.

3. Werkzeugwechselvorrichtung nach Anspruch 1 oder 2,
**dadurch gekennzeichnet,**
**daß** die Kulisse (6b) an einem starr mit dem Werkzeugmagazin (2) verbundenen Träger (6c) vorgesehen ist.

4. Werkzeugwechselvorrichtung nach einem oder mehreren der Ansprüche 1 bis 3,
**dadurch gekennzeichnet,**
**daß** die Transportvorrichtung (4) einen Schlitten (4a) aufweist, der an dem Werkzeugmagazin (2) in Transportrichtung (4f) verschieblich geführt ist und an dem die Werkzeugaufnahme (5) verschwenkbar gelagert ist.

5. Werkzeugwechselvorrichtung nach einem oder mehreren der Ansprüche 1 bis 3,
**dadurch gekennzeichnet,**
**daß** die Transportvorrichtung (4) zwei auf einer gemeinsamen Führung (4e) verschiebliche Schlitten (4a; 4b) aufweist, von denen der erste (4a) die Werkzeugaufnahme (5) trägt, mit der der zweite (4b) über einen Ausgleichshebel (4c) gelenkig verbunden ist.

6. Werkzeugwechselvorrichtung nach Anspruch 5,
**dadurch gekennzeichnet,**
**daß** ein Vorschubantrieb (4d) für die Transportvorrichtung (4) an dem zweiten Schlitten (4b) angreift.

7. Werkzeugwechselvorrichtung nach einem oder mehreren der Ansprüche 1 bis 6,
**dadurch gekennzeichnet,**
**daß** die Werkzeuge (3) einen Kegelschaft (3b) zu ihrer Aufnahme in der Werkzeugspindel (1) aufweisen, an dem sie im Werkzeugmagazin (2) gehaltert sind, und eine keilförmige Ringnut (3b), mit der sie in der Werkzeugaufnahme (5) aufgenommen sind.

8. Werkzeugwechselvorrichtung nach einem oder mehreren der Ansprüche 1 bis 7,
**dadurch gekennzeichnet,**
**daß** die Werkzeugaufnahme (5) eine die keilförmige Ringnut (3b) übergreifende Führungsplatte (5b) aufweist, die quer zur Transportrichtung verschieblich ist.

9. Werkzeugwechselvorrichtung nach einem oder mehreren der Ansprüche 1 bis 8,
**dadurch gekennzeichnet,**
**daß** die Werkzeuge (3) im Werkzeugmagazin (2) umlaufend gehalten sind und in Umlaufrichtung des Werkzeugmagazins (2) zwei unabhängig voneinander antreibbare Transportvorrichtungen (4) nebeneinander vorgesehen sind.

## Claims

1. Tool change device for a machine tool with a tool spindle (1) which can be moved at least in the axial direction of the spindle and in which a tool (3) can be clamped in a spindle transfer position, with a tool magazine (2) in which a tool (3) which is to be changed and which has a rotational axis (3a) is held in an orientation which differs from the axial direction of the spindle, and with a transport device (4) on which a tool holder (5) is mounted which by means of an actuating device (6) having a slide guide (6a, 6b) swivels the tool (3) about a swivel axis (5a) during its transport between the spindle transfer position and a stand-by position wherein the transport device (4) is designed for an overall transport path between the stand-by position and the spindle transfer position and the swivel axis (5a) runs perpendicular to a plane spanned by the transport direction (4f) and the spindle axis (1a),
**characterised in that**
the transport device (4) is designed so that the transport direction (4f) for the overall transport path is aligned with the orientation of the rotational axis (3a) of the tools (3) in the magazine.

2. Tool change device according to claim 1,
**characterised in that**
a slide block (6a) of the actuating device (6) is fixed on the movable tool holder (5) and the slide guide (6b) is mounted stationary.

3. Tool change device according to claim 1 or 2,
**characterised in that**
the slide guide (6b) is provided on a support (6c) which is connected rigidly to the tool magazine (2).

4. Tool change device according to one or more of claims 1 to 3,
**characterised in that**
the transport device (4) has a slide carriage (4a) which is guided displaceable in the transport direction (4f) on the tool magazine (2) and on which the tool holder (5) is mounted for pivotal movement.

5. Tool change device according to one or more of claims 1 to 3,
**characterised in that**
the transport device (4) has two slide carriages (4a; 4b) which are displaceable on a common guide (4e) and of which the first (4a) supports the tool holder (5) to which the second (4b) is connected for articulated movement through a compensating lever (4c).

6. Tool change device according to claim 5,
**characterised in that**
a feed drive (4d) for the transport device (4) engages on the second slide carriage (4b).

7. Tool change device according to one or more of claims 1 to 6,
**characterised in that**
the tools (3) have a cone shaft (3b) to fit in the tool spindle (1) and through which they are held in the tool magazine (2), and a wedge-shaped ring groove (3b) through which they are held in the tool holder (5).

8. Tool change device according to one or more of claims 1 to 7,
**characterised in that**
the tool socket (5) has a guide plate (5b) which engages over the wedge-shaped ring groove (3b) and which is displaceable across the transport direction.

9. Tool change device according to one or more of claims 1 to 8,
**characterised in that**
the tools (3) are held circumferentially in the tool magazine (2) and two transport devices (4) which can be driven independently of each other are provided side by side in the circumferential direction of the tool magazine (2).

## Revendications

1. Dispositif de changement d'outil pour une machine-outil, avec une broche porte-outil (1) qui peut être conduite, au moins, dans la direction axiale de la broche, et dans laquelle un outil peut être serré dans une position de remise à la broche, avec un magasin d'outil (2), dans lequel un outil (3) à changer, présentant un axe de rotation (3a), est maintenu dans une orientation qui diverge de la direction de l'axe de la broche, et avec un dispositif de transport (4), auquel est monté un dispositif de réception d'outil (5) qui, à l'aide d'un dispositif d'actionnement (6) présentant un guidage coulissant (6a, 6b) fait pivoter l'outil (3), autour d'un axe de pivotement (5a), pendant son transport entre la position de transfert broche et une position d'attente, et l'axe de pivotement (5a) étant orienté perpendiculairement par rapport à un plan par la direction de transport (4f) et l'axe (1a) de la broche,
**caractérisé en ce que**
le dispositif de transport (4) est dimensionné de sorte que la direction de transport (4f) pour la totalité du parcours de transport est en alignement avec l'orientation de i'axe de rotation (3a) de l'outil (3) en magasin.

2. Dispositif de changement d'outil selon la revendication 1,
**caractérisé en ce que**
le coulisseau (6a) du dispositif d'actionnement (6) est fixé au dispositif de réception d'outil (5) mobile, et que la coulisse (6b) est installée de manière stationnaire.

3. Dispositif de changement d'outil selon la revendication 1 ou 2,
**caractérisé en ce que**
la coulisse (6b) est prévue sur un support (6c) qui est relié rigidement au magasin d'outils (2).

4. Dispositif de changement d'outil selon une ou plusieurs revendications 1 à 3,
**caractérisé en ce que**
le dispositif de transport (4) présente un chariot (4a) qui est guidé, mobile dans la direction de transport (4f), au magasin d'outils (2), et auquel le dispositif de réception d'outil (5) est monté, pivotant.

5. Dispositif de changement d'outil selon une ou plusieurs revendications 1 à 3,
**caractérisé en ce que**
le dispositif de transport (4) présente deux chariots (4a; 4b), déplaçables sur un dispositif de guidage commun (4e), dont le premier (4a) porte le dispositif de réception d'outil (5) auquel le deuxième (4b) est relié, articulé, par l'intermédiaire d'un levier de compensation (4c).

6. Dispositif de changement d'outil selon la revendication 5,
**caractérisé en ce qu'**
une commande de l'avance (4d) pour le dispositif de transport (4) attaque le deuxième chariot (4b).

7. Dispositif de changement d'outil selon une ou plusieurs revendications 1 à 6,
**caractérisé en ce que**
les outils (3) présentent, pour leur réception dans la broche porte-outil (1), une queue conique (3b) par laquelle ils sont maintenus dans le magasin d'outils (2), et une rainure annulaire, conique (3b) par laquelle ils sont reçus dans le dispositif de réception d'outil (5).

8. Dispositif de changement d'outil selon une ou plusieurs revendications 1 à 7,
**caractérisé en ce que**
le dispositif de raccordement d'outil (5) présente une plaque de guidage (5b) qui, agrippant par chevauchement la rainure annulaire, conique, peut être déplacée transversalement par rapport à la direction de transport.

9. Dispositif de changement d'outil selon une ou plusieurs revendications 1 à 8,
**caractérisé en ce que**
les outils (3) sont maintenus en continu dans le magasin (2) et que, dans le sens périphérique du magasin d'outils (2), deux dispositif de transports (4), commandés indépendamment l'un de l'autre, sont prévus l'un à côté de l'autre.
